# EUROPEAN PATENT APPLICATION

(11) **EP 4 509 466 A1**
(43) Date of publication of application: **19.02.2025**
(21) Application number: 23191339.3
(22) Date of filing: 14.08.2023
(51) Int. Cl.: C02F 1/34, B01F 23/2326, B01F 23/237, B01F 23/23, C02F 1/36, C02F 1/64, C02F 1/74, C02F 101/20

(54) **SYSTEM AND METHOD FOR REMOVAL OF IRON FROM WATER**

(71) Applicant: Vilniaus Gedimino technikos universitetas, 10223 Vilnius (LT)
(72) Inventor: Kilikevicius, Arturas, Vilnius (LT); Chlebnikovas, Aleksandras, Vilnius (LT); Paliulis, Dainius, Vilnius (LT); Kilikeviciene, Kristina, Vilnius (LT)
(74) Representative: Pakeniene, Ausra

(57) **Abstract**

The invention is a system and a method for increasing degree of gas saturation in a working fluid under different conditions of modified fluid flow. The system comprises an ejector for liquid oxygenation for use in water treatment systems where it is required to oxygenate the treated water immediately before the pollutant removal process. The system comprises channels connected in an elongated U-shape with openings on both sides of the walls through which a secondary flow of ejected medium is supplied for additional saturation. The system also comprises an acoustic device at the end of the mixing zone. The acoustic device is composed of a piezo element that causes an acoustic cavitation effect. The formed air bubbles increase the degree of oxygen saturation in the liquid. This results in the oxidation of iron (II) compounds in the liquid to iron (III), which precipitates and can be removed improving water quality.

## Description

### Field of the invention

The invention relates to a system and a method for removing soluble iron (II) compounds as impurities/contaminants from a liquid medium by oxidation.

### Background of the invention

Preparation of liquids, including water (drinking and other types) for consumption and/or use is required in different areas of application. As a result, there is a need to change chemical composition and physical properties of these liquids to meet certain hygienic, technical, or other requirements.

Chemical reagents can be used to remove impurities, which are introduced into a liquid. Reagent-free methods can also be applied. Of these reagent-free methods, hydrodynamic reagent-free technologies are currently used to remove iron from water. Improving solubility of air oxygen in water, thereby activating the processes of oxidation and separation of iron (II) compounds plays an important role. However, technological parameters, such as the frequency, intensity, etc. of the acoustic field created in the liquid are not determined and optimized during hydrodynamic reagent-free cleaning. The dependence of the removal of iron (II) compounds from water on the above-mentioned factors has not yet been fully investigated and used, which is relevant at the present time. Used ejectors, in addition to the main purpose of mixing air with water, can create a pressure effect on the air-water mixture, which would help remove iron from the water. Nevertheless, when using ejectors, it is almost impossible to control a constant pressure level due to complex hydrodynamic processes that occur during ejector operation.

Republic of Lithuania patent no. LT6011 discloses a pulsating flow ejector which can increase efficiency of pulsating flow ejector, ensuring a linear dependence of flow rate of ejected medium on flow rate of working fluid. The device works only on hydrodynamic principle, i.e. under pressure, the flow of the working fluid is supplied to a cavity of a mouth where it is swirled due to holes arranged in tangential direction in a wall of the mouth and is directed to bottom of the mouth. However, impurity removal process may require varying rates of mixing of the working fluid. In this invention, additional turbulence is created by irregularities on the bottom. Negative pressure is created in a narrowest plane of irregular triangle-inclined pyramid-shaped protrusions at a hole connecting the mouth with the cavity of the ejected medium. The ejected flow enters through this hole and mixes with the working fluid. When the ratio of dynamic and static pressure changes, the swirled flow begins to flow towards the diffuser, closing the entry of the working fluid through the holes to the mouth, which reduces the static pressure, so the flow of liquid through the tangentially arranged holes into the mouth cavity opens again. The process can repeat from 1 to 20 kHz. Under specific conditions where the working fluid circulates in a system that already has a certain dynamic and/or static pressure (excess or vacuum), the application of this invention would be complicated by the swirled flow change, so it should be calibrated or redesigned for each situation.

In US patent application no. US16/004,378, publication No. US20190373828A1, a flow-through oxygen injector is disclosed, which is a circuit of one or more Venturi tubes in a working chamber. When the Venturi(s) are installed in an airtight chamber, passing water creates a negative pressure. In addition, a minimal amount of pure oxygen is injected into the working chamber creating very small bubbles of oxygen in the water passing through the Venturi tubes. Very small bubbles of oxygen remain in suspension and form a solution saturated with oxygen. The invention works only on the hydrodynamic principle, which limits its application possibilities.

The disclosures above are limited to saturating liquids with oxygen. The preparation of a fluid, such as wastewater before biological treatment or potable water, is not limited to adjusting oxygen concentration in a fluid. Main negative effect on the chemical quality of natural water is caused by iron (III) and calcium and/or magnesium salts. The latter causes "hard water" effect, where the present organic compounds are most undesirable in water. The cited prior art does not teach removal of these elements and compounds.

U.S. Patent No. US9,931,602B1 discloses an installation and a method for accelerating mass exchange of a material to be processed in a liquid. Mixing takes place throughout a pipe into which part of the liquid flows. The liquid is partially mixed with the solvent and re-injected into the pipe downstream after the injection device. Between the diverting pipe upstream and the injection device downstream, there are a number of flow vanes arranged around the cylindrical inner axis of the pipe, and the delivery pipe is immersed in the flow of the working fluid. This method can be applied to the treatment of aqueous sewage, when additives are used to be mixed with the flow and the flow rate is high enough (at least 100 l/min).

Without additional preparation of the working fluid at low temperatures, mixing processes slow down, especially for fluids with higher viscosity.

The main disadvantages of the prior art are that the ejected medium is not prepared before entering the mixing chamber and the length of the mixing zone is not long enough. The inventions include chambers that are used as a compensating vessel. After entering this chamber, the working fluid enters directly into dedicated devices - Venturi-type pipes or through a diffuser into the mouth.

The invention does not have the above disadvantages of effective liquid saturation, which is necessary for the precipitate of iron (II) from a bound chemical state in the liquid, and includes additional advantages.

### Reagent-free methods.

There are known traditional reagent-free methods of water de-ironing. Such cleaning can take place when the pH is at least 6.7; alkalinity at least 1 mg-equiv/l; permanganate oxidation - no more than 7 mg O₂/l. The following chemical reaction takes place:

4Fe²⁺ + O₂ + 8HCO₃⁻ + 2H₂O = 4Fe(OH)₃↓ + 8CO₂↑

The method of iron oxidation by simplified aeration is based on water containing divalent iron and dissolved oxygen, capable of filtering through a granular layer to release iron on the surface of these grains, forming a catalytic film of divalent and trivalent iron ions and oxides. This film actively intensifies the process of oxidation and iron separation from water. At the beginning of the de-ironing process, when the first portion of water falls on the filter, when the charge is still clean, iron compounds are adsorbed on its surface in a monomolecular layer, i.e. physical adsorption occurs. After the formation of the monomolecular layer, the process of separation of iron compounds on sand grains does not stop, but on the contrary, it intensifies, due to the chemically more active formed monolayer than the clean charge surface (sand). The adsorption properties of the film of iron compounds on the grains of the filter load, its large specific surface area and the presence of a large amount of bound water determine the properties of the film as a very strong adsorbent with a porous structure. At the same time, the film acts as an oxidation catalyst for iron (II) entering the charge. Water purification in this way is much more efficient than it would be in a homogeneous layer.

Deironing of water in the charge covered with a film is considered a heterogeneous autocatalytic process, which ensures continuous regeneration of the film as a catalyst required for direct filter operation.

### Reactive methods.

Reactive water deironing methods are applied at low pH values. The following oxidation reaction takes place:

2Fe²⁺ + Cl₂ + 6HCO₃⁻ = 2Fe(OH)₃↓ + 2Cl⁻ + 6CO₂↑

Using potassium permanganate as a chemical reagent, the oxidation reaction and the subsequent hydrolysis reaction takes place according to the following scheme:

**3**Fe²⁺ +6HCO₃⁻ + KMnO₄ + **2H**₂O → **3**Fe(OH)₃↓ + MnO₂↓ + KHCO₃ + **5**CO₂↑

One of the additional possibilities in the application of reactive methods is also the de-manganization of water. Above all, these methods include oxidation methods using chlorine, ozone, potassium permanganate, and technical oxygen. One of the more effective and technologically simple methods for removing manganese (II) from surface and underground water is treatment with potassium permanganate:

3Mn²⁺ + 2MnO₄⁻ + 2H₂O = 5MnO₂↓ + 4H⁺

An important aspect of the use of potassium permanganate is that during the chemical reaction, dispersion precipitate of manganese oxide MnO₂ with a high specific surface area of about 300 m²/g are formed, which can be used as an effective sorbent. After water treatment with potassium permanganate, impurities and odors are removed due to the partial oxidation/sorption of organic compounds when manganese hydroxide precipitates as flakes. Thus, the application of potassium permanganate allows the removal of both manganese and iron from water, regardless of their form in the water. In water with a higher concentration of organic compounds, iron and manganese make stable organic compounds (complexes), the removal of which is slow and difficult with conventional water treatment with chlorine and coagulant. Potassium permanganate as a strong oxidizer allows to break down these complexes and oxidize manganese (II) and iron (II) ions and coagulate oxidation products.

### Parameters promoting iron removal efficiency.

The process of pre-aeration of water significantly increases acidity (pH ion content), oxidation-reduction potential, and dissolved oxygen content in groundwater and provides conditions for intensive chemical oxidation of Fe²+ ions in-situ in aqueous iron oxide flakes.

Dual action techniques are employed, using aeration and changing/adjusting pH to increase iron precipitate. Fe(OH)₃ can act as a catalyst for the conversion of Fe²⁺ into Fe³⁺ with further precipitate of the latter. Research has shown that dissolved oxygen is adsorbed by Fe(III) precipitate. Also, Fe(II) can be adsorbed and transformed into iron (hydro)oxide. Also, the Fe(III)-Fe(II) system often participates as an electron carrier, so the oxidation of Fe(II) to the adsorption phase can be enhanced when the solution is supplemented with Fe(III) precipitate. Therefore, the surface of Fe(III) precipitate can have a catalytic effect on Fe(II) oxidation.

### Alternative ways to remove iron.

There is a known method of high-efficiency electrocoagulation (EC) applied in water purification or purification. This method is often avoided, but there are studies where this method is applied in the treatment of wastewater in urbanized areas and in the preparation of drinking water. Compared to other methods, the EC process can be applied in environments with different characteristics, it has a strong impact, so it is suitable for high-performance flow, the water quality remains the same during the flow, because no toxic substances are used and no secondary pollutants are formed. The EC process is not only effective, but also takes little time and is not complicated to apply.

There is a known EC method, which uses various electrodes containing carbon, soft (low carbon) steel, graphite, titanium, iron and aluminum. Iron and aluminum electrodes are very effective, but require special environmental conditions to be used. The state of iron in water depends primarily on pH and redox potential. As pH increases, dissolved iron, i.e. Fe(II) or Fe(III), hydrolyzes and precipitates. The iron ion hydrolyzes to form a single core FeOH+ array to Fe(OH)4⁻², at which point the water must be between pH 7 and 14. The iron ion Fe(III) hydrolyzes much more readily than the ferrous ion Fe(II), so iron is present as a precipitate at pH 7-8. The rate of oxidation of iron (II) ions in air increases with increasing pH and up to 90% conversion can be achieved within minutes at pH 7.

As an oxidizer, potassium permanganate (KMnO₄) is generally more expensive than chlorine and ozone, but studies have shown that it is just as effective in removing iron and manganese and does not require much equipment to prepare, so its cost is lower. However, the dose of potassium permanganate must be carefully controlled.

### Comparison of the main methods of water deironing.

The most popular methods for water treatment are:
Electrocoagulation. Efficiency is 95-99. Operating condition. Current density 0.01 to 0.04 A/m². pH should be slightly basic approx. 7.5. EC found to be very fast and effective method for the water containing iron from low to very high concentrations. Advantages. EC requires simple equipment and is easy to operate with sufficient operational latitude to handle most problems encountered on running. Wastewater treated by EC gives palatable, clear, colorless and odorless water. EC technique can be conveniently used in rural areas where electricity is not available, since a solar paned attached to the unit may be sufficient to carry out the process. Disadvantages. The sacrificial electrodes are dissolved into wastewater streams because of oxidation and need to be regularly replaced. Adaptable for household use.

Oxidation/filtration method. Efficiency is 80-90. Operating condition. pH should be in range of 7.5 to 8.5. Quality of water that used. Advantages. Most iron treatment systems employ the processes of oxidation/ filtration. The oxidant chemically oxidizes the iron (forming a particle) and kills iron bacteria and any other disease-causing bacteria that may be present. A low-cost method of providing oxidation is to use the oxygen in air as the oxidizing agent. Disadvantages. The oxidant is difficult to store or transport safely and system parts can be degraded by corrosion. The oxidation reaction results in a solid manganese compound that may interfere with system operation. Uses in rural areas.

Ion exchange. Efficiency is ≈ 90. Operating condition. Effective for water containing less than 25 mg/L of dissolved Fe/Mn. Advantages. Can remove iron that bound with organics. Softener resin can be rejuvenated and reused. Water quality such as pH or alkalinity are not important in the operation of IE. Disadvantages. Used only for small quantities of iron and manganese because there is a risk of rapid clogging. If any oxidation occurs during the process, the resulting precipitate can coat and foul the media. Cleaning would then be required using acid or sodium bisulfate. Uses. Adoptable where use of water is minimum.

Adsorption. Efficiency is 84-92. Operating condition. Operated under anoxic condition suppressing the oxidation of ferrous iron and iron is removed by adsorptive filtration. Advantages. Longer filtration runs due to slower head loss development. Better filtrate quality. Shorter ripening time and less backwash water requirement. Disadvantages. Ferrous ion adsorbed at filter media which is cleaned by oxygen-rich water or by oxidant. Uses. Useful for surface water, e.g. well water.

### Summary of the invention

The invention is a system and a method for increasing degree of gas (oxygen) saturation in a working fluid under different conditions of modified fluid flow. The system comprises an ejector for liquid oxygenation for use in water treatment systems where it is required to oxygenate the treated water immediately before the pollutant removal process. The system comprises channels connected in an elongated U-shape with openings on both sides of the walls through which a secondary flow of ejected medium is supplied for additional saturation. The system also comprises an acoustic device at the end of the mixing zone. The acoustic device is composed of a piezo element that causes an acoustic cavitation effect. The formed air bubbles increase the degree of oxygen saturation in the liquid. This results in the oxidation of iron (II) compounds in the liquid to iron (III), which precipitates and can be removed thereby improving water quality.

Before being fed to the mixing zone, the ejected medium is prepared: pressure is created, and temperature is adjusted depending on properties of the medium.

The invention can be applied in different industries for the preparation of solutions, specifically saturation, with gases or liquids using vortex flow, for example, the preparation of aqueous waste water immediately before the pollutant removal process. The removal of metal compounds dissolved in liquid, including iron, manganese and/or calcium and magnesium salts, by acoustic cavitation is important for the preparation of water, especially drinking water.

### Short Description of Drawings

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

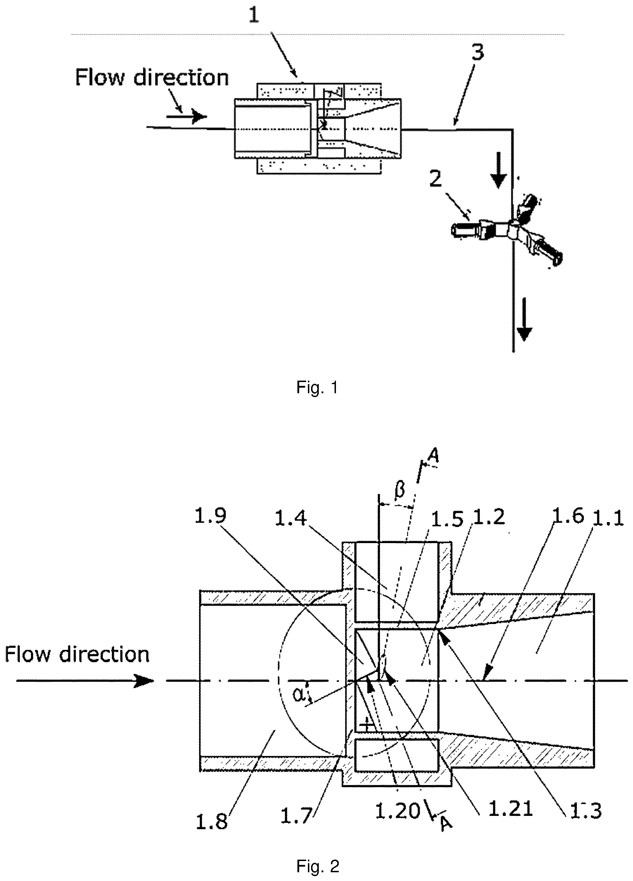

Fig. 1 shows schematic diagram of a system for removing iron from water comprising a pulsating flow ejector and a high hydrodynamic pressure forming piezo device according to the invention.
Fig. 2 shows a pulsating flow ejector used in the system according to the invention
Fig. 3 shows a high hydrodynamic pressure forming piezoelectric element used in the system according to the invention.
Fig. 4 shows a) variation of the concentration of divalent iron in water at different fluid velocities and sound frequencies using system according to the invention; b) variation of trivalent iron content in water at different fluid velocities and sound frequencies using ejector according to the invention.

Preferred embodiments of the invention will be described herein below with reference to the drawings. Each figure contains the same numbering for the same or equivalent element.

### Detailed description of the methods of implementation of the invention

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

The system for removal of iron from water according to the invention comprises an ejector (1) and a hydrodynamic pressure forming piezo device (2) fluidly interconnected by a fluid and gas mixture flow element (3) such as a pipe or a flexible hose.

The ejector (1) comprises a diffuser (1.1), a mouth (1.2), a conical part (1.3), an ejected medium cavity (1.4), a wall (1.5), a central axis (1.6), a formed bottom (1.7), a working flow spray hole (1.8), slopes (1.9), a plane (1.20), holes (1.21). The working flow spray hole (1.8) is located in a central axis of the ejector, but more complex designs can be used, when the spray hole (1.8) is arranged in the form of a ring, around the inner part of the wall (1.5) of a mixing chamber. One of the possible options is combined filling the nozzle with the working stream. But the most complex in such structural construction is the fact that the opening is formed by several or even several tens of injection openings around the cross-section of the mixing chamber.

The flow of the working fluid under pressure is supplied to the cavity of the mouth (1.2) where it is swirled. Additional turbulence of the swirled working flow is created due to the protrusions on the bottom. The negative pressure is created in the narrowest plane of the irregular triangle-inclined pyramid-shaped protrusions, at the hole connecting the mouth (1.2) with the cavity of the ejected medium. The ejected flow enters through this hole and mixes with the working fluid. When the ratio of dynamic and static pressure changes, the swirled flow begins to flow towards the diffuser, closing the entry of the working fluid through the holes to the mouth (1.2), which reduces the static pressure, so the flow of the liquid through the tangentially arranged holes into the mouth cavity opens again. The process can repeat from 1 to 20 kHz. This creates good conditions for the mixing of the two media, and the arrangement of the protrusions on the bottom of the mouth (1.2) in the direction of the radial direction increasing from the center of the mouth (1.2) towards the wall (1.5) ensures the even entry of the ejected medium into the mouth (1.2) cavity when there is a variable flow rate of the working fluid. The frequency of the generated acoustic field increases with the increase of the speed of the supplied flow at a constant volume of the air chamber of the pulsating flow ejector (1).

The ejector performs two main functions: it saturates liquid (water) with atmospheric oxygen (aeration) and organizes movement of flows in the total volume of water to evenly distribute the oxygen dissolved in it. The ejector does not require additional energy costs for air supply, can maintain a constant water-to-air ratio with sufficient accuracy when changing performance, and is easy to manufacture and maintain, compact, durable, and low wear.

The system for removal of iron from water also comprises a hydrodynamic pressure forming piezo device (2) comprising an aluminum body (2.2), three iron cylinders (2.3) each comprising a piezo element (2.4) and a screw (2.5) for fixing the piezo element (2.3) to the cylinder (2.3). The iron cylinders (2.3) are evenly distributed around a hollow center part (2.6) and connected to the hollow center part (2.6) via vibration from piezo elements (2.4) conduiting connecting elements.

The ejector (1) is positioned on a flow path of a working liquid of gas and liquid and fluidly connected with the hydrodynamic pressure forming piezo device (2) by a connecting element (3) such as a hose. The hydrodynamic pressure forming piezo device (2) is positioned downstream from the ejector (1). The liquid and gas mixture flows through a hollow of a center part (2.6) in the hydrodynamic pressure forming piezo device (2). When voltage is supplied to the piezo elements (2.4), vibrations of the piezo elements (2.4) are transformed into displacements of center part (2.6) of the aluminum body (2.2). The displacements have harmonic cycle and induces high pressure in the liquid gas mixture flowing through the hollow of the center part (2.6).

In order to optimize process of removing the soluble divalent iron Fe(II) compounds from the liquid using system of the ejector (1) and the hydrodynamic pressure forming piezo device (2), the following parameters are optimized: angle of inclination of the nozzles; the number of nozzles; the nozzle outlet diameter; the length of the mixing chamber; the working pressure in the hydraulic system; and the liquid temperature.

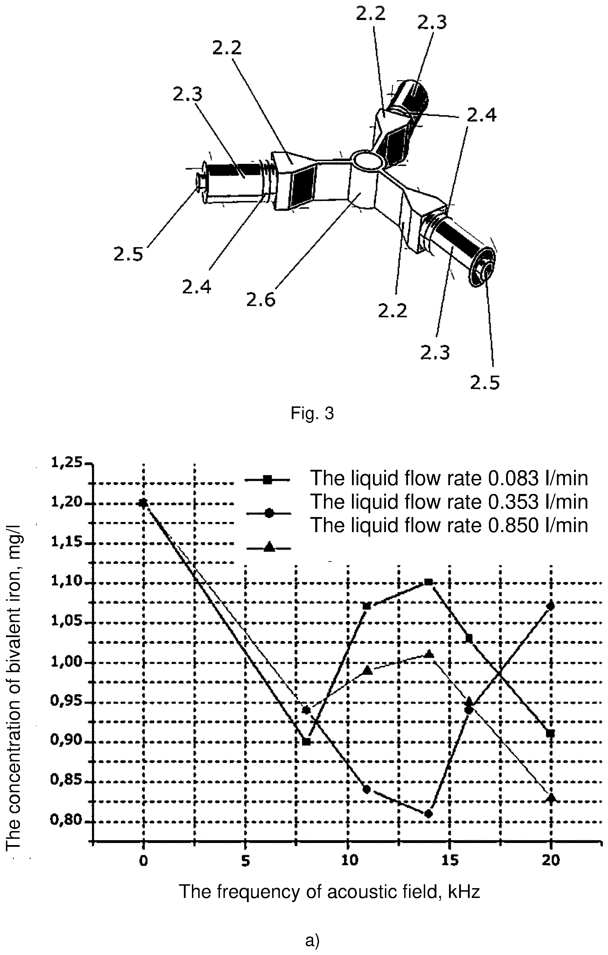

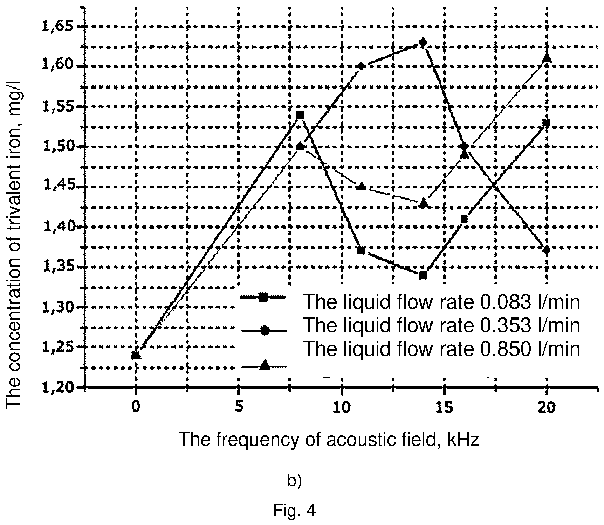

Iron (II) compounds dissolved in water are affected by sound:
As shown in Fig. 4, concentrations of divalent (Fe²⁺) and trivalent iron (Fe³⁺) are determined in water at different liquid flow rates and sound frequencies. The conversion of divalent iron (Fe²⁺) into insoluble precipitate of trivalent iron (Fe³⁺) is influenced by the ratio of liquid flow rate and acoustic frequency.

The following chemical reaction takes place in the liquid: 4Fe²⁺ + O₂ + 10H₂O →4Fe(OH)₃↓+8H⁺. This chemical reaction is accelerated by the formation of Fe(OH)₃. The resulting iron (III) precipitate can be removed from the liquid by filtration, centrifugation, or other methods.

In a particular example, maximum Fe²⁺ oxidation effect is achievable at a liquid flow rate of 0.350 l/min at the sound frequency of 14 kHz. Fig. 4a and 4b shows that at other fluid flow rates, the conversion of divalent iron Fe²⁺ compounds to trivalent iron (Fe³⁺) from 14 kHz increases proportionally with increasing acoustic field frequency. Increasing frequency of the acoustic field at water flow rate of 0.850 l/min, more effective oxidation of divalent iron (Fe²⁺) in the liquid can be expected.

The operation according to the present invention is based on both hydrodynamic and acoustic principles of operation. The simultaneous action of tailored fluid flow and acoustic cavitation phenomena ensures a wide range of applications for different impurities. The ability to adjust the acoustic source optimizes reagent-free impurity removal. The new generation piezo device system ensures wide functionality and the possibility of applying this invention in various hydrological conditions.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

## Claims

1. System for removal of iron from water comprising an ejector (1) comprising a diffuser (1.1), a mouth (1.2), a conical part (1.3), an ejected medium cavity (1.4), a wall (1.5), a central axis (1.6), a formed bottom (1.7), a working flow spray hole (1.8), slopes (1.9), a plane (1.20), holes (1.21) **characterized in that** the system further comprises a hydrodynamic pressure forming piezo device (2) comprising an aluminum body (2.2), three iron cylinders (2.3) each comprising a piezo element (2.4) and a screw (2.5) for fixing the piezo element (2.3) to the cylinder (2.3), a hollow center part (2.6), where the iron cylinders (2.3) are evenly distributed around a hollow center part (2.6) and connected to the hollow center part (2.6) via vibration from piezo elements (2.4) conduiting connecting elements, where the ejector (1) is positioned on a flow path of a working liquid of gas and liquid and fluidly connected with the hydrodynamic pressure forming piezo device (2) and the hydrodynamic pressure forming piezo device (2) is positioned downstream from the ejector (1).

2. The method for removing iron from water using the system according to claim 1, where the flow of working fluid under pressure is supplied to the cavity of the mouth (1.2) where it is swirled, where additional turbulence of the swirled working flow is created due to the irregularities on the bottom (1.7), where the negative pressure is created in the narrowest plane of the irregularities in the shape of an irregular triangle with an inclined pyramid at the hole connecting the mouth (1.2) with the cavity (1.4) of the ejected medium, the ejected flow enters through this hole and mixes with the working fluid, where when the ratio of the dynamic and the static pressures changes, the swirled flow begins to flow towards the diffuser (1.1), closing the entry of the working fluid through the holes to the mouth (1.2), which reduces the static pressure, so the flow of the fluid opens again through the holes arranged in a tangential direction into the mouth (1.2) cavity, where the process repeats from 1 to 20.0 kHz **characterized in that** the liquid and gas mixture after exiting the ejector (1) further flows through a hollow of a center part (2.6) in the hydrodynamic pressure forming piezo device (2) and when voltage is supplied to the piezo elements (2.4) vibrations of the piezo elements (2.4) are transformed into displacements of center part (2.6) of the aluminum body (2.2) where the displacements have harmonic cycle and induces high pressure in the liquid gas mixture flowing through the hollow of the center part (2.6).
